# EUROPÄISCHE PATENTSCHRIFT

(11) **EP 1 074 147 B1**
(45) Veröffentlichungstag und Bekanntmachung des Hinweises auf die Patenterteilung: **10.09.2003**
(21) Anmeldenummer: 99913297.0
(22) Anmeldetag: 24.03.1999
(51) Int. Cl.: H04N 7/24, H04N 7/58, H04N 7/62

(54) **VERFAHREN ZUR ÜBERTRAGUNG VON ZEITKRITISCHEN DATENPAKETEN IN DIGITALEN DRAHTLOSEN ÜBERTRAGUNGSSYSTEMEN**
METHOD FOR TRANSMITTING TIME-CRITICAL DATA PACKETS IN DIGITAL WIRELESS TRANSMISSION SYSTEMS
PROCEDE DE TRANSMISSION DE PAQUETS DE DONNEES DE CLASSE CRITIQUE DANS DES SYSTEMES DE TRANSMISSION NUMERIQUES SANS FIL

(30) Priorität: 27.03.1998 DE 19813551
(43) Veröffentlichungstag der Anmeldung: 07.02.2001
(73) Patentinhaber: GRUNDIG Aktiengesellschaft, 90471 Nürnberg (DE)
(72) Erfinder: HERFET, Thorsten, D-90518 Altdorf (DE); BAUERSCHMIDT, Werner, D-90579 Langenzenn (DE)
(74) Vertreter: Pröll, Jürgen
(86) Internationale Anmeldenummer: EP9902015
(87) Internationale Veröffentlichungsnummer: WO99051032

(56) Entgegenhaltungen:
- EP-A- 0 624 983
- WO-A-95/23495
- US-A- 5 561 791
- US-A- 5 596 581
- US-A- 5 640 388
- RIEMANN U: "DER MPEG-2-STANDARD GENERISCHE CODIERUNG FUR BEWEGTBILDER UND ZUGEHORIGER AUDIO-INFORMATION. MULTIPLEX-SPEZIFIKATION FOR DIE FLEXIBLE UBERTRAGUNG DIGITALER DATENSTROME" FERNSEH UND KINOTECHNIK, Bd. 48, Nr. 10, 1. Oktober 1994 (1994-10-01), Seiten 545-550, 553, XP000468290 ISSN: 0015-0142

## Beschreibung

Die Erfindung betrifft ein Verfahren zur Übertragung von zeitkritischen Datenpaketen.

Derzeit erfolgt in der Fernsehtechnik ein Übergang von analogen zu digitalen Übertragungssystemen. Im Zusammenhang mit digitalen Übertragungssystemen ist ein nach dem MPEG-Standard arbeitendes Quellencodierverfahren bekannt geworden. Dieses erlaubt eine Datenkompression, die eine besonders effiziente Übertragung der Daten zuläßt. Beispielsweise war es in der analogen Technik möglich, auf einem Satellitentransponder von 33 MHz Bandbreite ein Fernsehprogramm zu übertragen. Mit der digitalen Technik können hingegen fünf bis zehn Programme gleicher Qualität auf demselben Transponder übertragen werden.

Beim MPEG-Standard werden die einzelnen Programme im Zeitmultiplex in Form von Datenstromen übertragen, die in Blöcke bzw. Datenpakete aufgeteilt sind. Ein Programm besteht aus mehreren Datenströmen unterschiedlicher Art (Videoinformationen. Audioinformationen, Hilfsinformationen), den sogenannten elementaren Datenströmen. Die elementaren Datenstrome eines Programmes werden in einem Programm-Multiplexer zu einem Programmdatenstrom zusammengefügt. Mehrere Programmdatenstrome werden in einem Transport-Multiplexer zum Transportdatenstrom zusammengesetzt. Dieser wird über einen sog. Uplink zu einem Satelliten ubertragen, welcher das Signal umsetzt und für den Satellitendirektempfang beim Zuschauer verteilt.

Aus den von einer Satellitenantenne empfangenen Signalen wird mittels eines Satellitenempfängers oder einer Set-Top-Box der MPEG-Datenstrom regeneriert und einem nachgeschalteten Fernsehgerät oder Videorecorder zugeführt. Dort erfolgt eine Abtrennung der einem gewünschten Fernsehprogramm zugehörigen Datenpakete und eine MPEG-Decodierung. Die dem gewünschten Fernsehprogramm zugehörigen Datenpakete werden innerhalb des MPEG-Datenstromes im Zeitmultiplex mit anderen Programmen zugeordneten Datenpaketen übertragen, sind also zeitlich voneinander beabstandet. in jedem der Datenpakete, die dem gewünschten Programm zugeordnet sind, ist eine Information enthalten, die Auskunft über den Zeitpunkt der Übertragung des nächsten Datenpaketes gibt, das dem gewünschten Programm zugehörig ist. Diese Information über den Zeitpunkt der Übertragung des nächsten Datenpakets wird vom MPEG-Decoder zum Setzen eines Zeitfensters verwendet, in welchem auf das Auftreten dieses nächsten Datenpakets gewartet wird, das einer MPEG-Decodierung unterworfen werden muß. Folglich brauchen im MPEG-Decoder keine Datenpakete überprüft und zwischengespeichert zu werden, die nicht zum gewünschten Programm gehören. Die Speicherkapazität des Speichers im MPEG-Decoder muß folglich lediglich so groß sein, daß ein vollständiges Datenpaket decodiert werden kann. Bei der Übertragung von MPEGcodierten Datenpaketen handelt es sich demnach um zeitkritische Datenpakete, deren relative zeitliche Lage zueinander bei der MPEG-Decodierung bekannt sein muß.

Diese Information über die zeitliche Lage der einzelnen Datenpakete eines gewünschten Rundfunkprogrammes relativ zueinander geht jedoch verloren, wenn MPEG-codierte Signale beispielsweise über eine Funkübertragungsstrecke übertragen werden sollen, deren Übertragungsbandbreite wesentlich kleiner ist als die für eine Satellitenübertragung MPEG-codierter Signale zur Verfügung stehende Bandbreite Denn in drahtlosen Funkubertragungssystemen sind sowohl die Latenz als auch die Laufzeit der Datenpakete nicht vorhersehbar, da sie von Der Systembelegung (CSMA-Zugriff) und von der Übertragungsentfernung abhängen.

Aus US-A-5596581 ist eine Verfahren zur Übertragung zeitkritischer Daten bekannt. Diese Daten werden über einen asynchronen Kanal ohne eine Veränderung der vorhandenen Zeitinformation übertragen. Bei den zeitkritischen Daten handelt es sich um einen MPEG-Transportstrom. Bei dem asynchronen Kanal handelt es sich um einen Computer oder ein digitales Telefonnetzwerk, ein digitales Speichermedium wie einen digitalen Videorecorder oder eine digitale Schnittstelle. Bei dem erfindungsgemäßen Verfahren wird jede Übertragungseinheit des Datenstromes markiert, ehe selbige in den asynchronen Übertragungskanal geleitet wird. Die Markierung erfolgt anhand von Zeitinformationen. Am Kanalausgang wird diese Zeitinformation zur Wiederherstellung der ursprünglichen Zeitinformation verwendet.

Aus EP-A-0624983 ist ein Gerät zur Verarbeitung komprimierter Videosignale bekannt. Das Gerät weist einen Videoencoder auf, welcher in den Daten enthaltene Zeitinformationen auswertet. Im weiteren sind Mittel vorgesehen, welche Zeitmarkierungen generieren, welche zur Synchronisation des komprimierten Videosignals dienen. Es ist außerdem ein Prozessor vorgesehen, welcher die Zeitmarkierungen und einen Identifizierungsheader erstellt und diese in den Datenstrom integriert.

Aus Reimann U.: "Der MPEG-"Standard; Generische Codierung für Bewegtbilder und zugehöriger Audio-Information" aus Fernseh- und Kinotechnik, Bd. 48, Nr. 10 vom 1. Oktober 1994, Seiten 545 bis 550 ist ausführlich der MEPG-2-Standard beschrieben.

Ausgehend von diesem Stand der Technik liegt der Erfindung die Aufgabe zugrunde, einen neuen Weg aufzuzeigen, wie zeitkritische Datenpakete über eine laufzeitbehaftete Übertragungsstrecke übertragen werden können.

Diese Aufgabe wird durch ein Verfahren und durch Geräte mit den im Anspruch 1,8 und 10 angegebenen Merkmalen gelöst. Vorteilhafte Ausgestaltungen und Weiterbildungen der Erfindung sind Gegenstand der abhängigen Ansprüche.

Die Vorteile der Erfindung bestehen insbesondere darin, dass durch das senderseitige Aufprägen von Zeitinformationen auf jedes der zu übertragenden Datenpakete empfangsseitig eine Information zur Verfügung steht, die es erlaubt, die einzelnen Datenpakete in exakt derselben relativen zeitlichen Lage zueinander zur Verfügung zu stellen, wie sie senderseitig vorlag. Dadurch werden unerwünschte Laufzeiteffekte, die auf der Übertragungsstrecke auftreten, vollständig kompensiert, so dass die Datenpakete beispielsweise in einem empfangsseitig angeordneten MPEG-Decoder, der die Datenpakete in zeitlich korrekter Lage benötigt, decodiert werden können.

Mittels der angegebenen Merkmale wird erreicht, dass die zeitkritischen Datenpakete auch über eine Übertragungsstrecke mit geringerer Bandbreite übertragen werden können.

Es werden die zeitlich voneinander beabstandeten Datenpakete aus einem MPEG-Datenstrom abgetrennt. Die zwischen den abgetrennten Datenpaketen vorhandenen Zeitintervalle begünstigen eine Abtastratenkonversion.

Es werden die zeitkritischen Datenpakete von einem ersten zu einem zweiten Gerät der Unterhaltungselektronik übertragen. Beispielsweise können auf diese Weise in einem Privathaushalt von einem Fernsehgerät, dem der MPEG-Transportstrom zugeführt wird, MPEG-codierte Signale drahtlos an ein anderes, in demselben Raum angeordnetes Gerät der Unterhaltungselektronik - z.B. einen Videorecorder oder einen Hörrundfunkempfänger - übertragen und erst dort MPEG-decodiert werden. Die Übertragung MPEG-codierter Signale von einem ersten zu einem zweiten Gerät der Unterhaltungselektronik ist unter anderem deshalb vorteilhaft, weil MPEG-codierte Signale mit einem hohen Fehlerschutz versehen sind, so dass auf der Übertragungsstrecke einen hohe Übertragungssicherheit gewährleistet ist.

Nachfolgend wird ein Ausführungsbeispiel für die Erfindung anhand der Figuren beschreiben.

Es zeigt:
- FIG 1: ein Blockschaltbild einer Vorrichtung zur Durchführung des beanspruchten Verfahrens,
- FIG 2: ein Zeitdiagramm zur Veranschaulichung der einzelnen Schritte einer ersten Ausführungsform des beanspruchten Verfahrens und
- FIG 3: ein Zeitdiagramm zur Veranschaulichung der einzelnen Schritte einer zweiten Ausführungsform des beanspruchten Verfahrens.

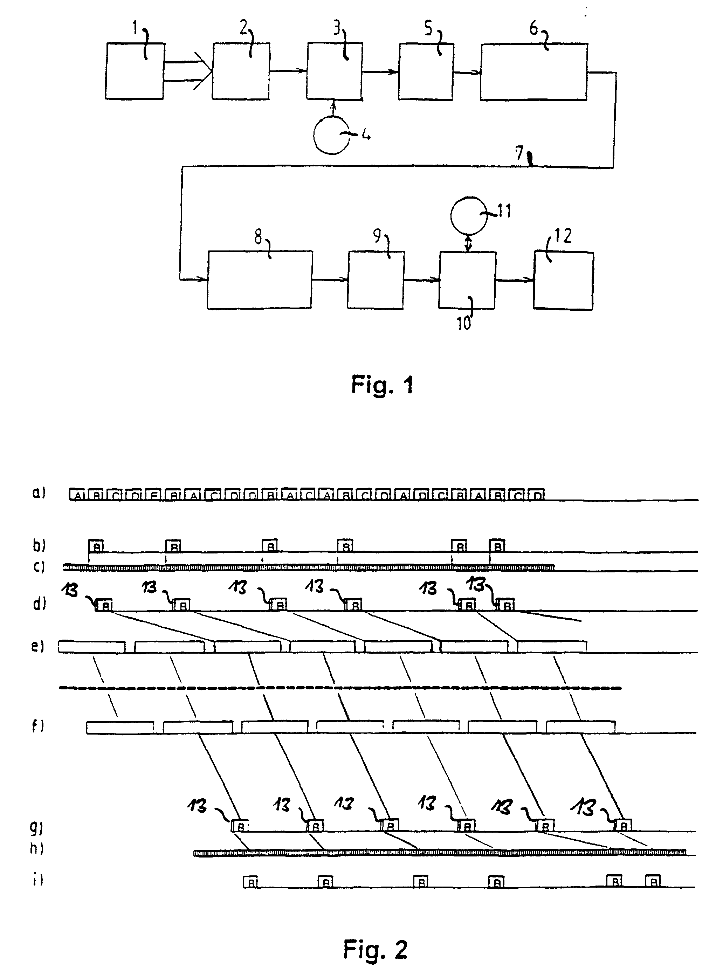

Die Figur 1 zeigt ein Blockschaltbild einer Vorrichtung zur Durchführung des beanspruchten Verfahrens. Die gezeigte Vorrichtung weist einen Satellitenempfänger oder eine Set-Top-Box 1 auf, mittels derer ein MPEG-Transportstrom. wie er von einem Rundfunksatelliten abgestrahlt wird, regenenert und einem Demultiplexer 2 zur Verfügung gestellt wird. Ein derartiger MPEG-Transportstrom ist in Figur 2a gezeigt und weist eine Vielzahl von Datenpaketen auf, die mit den Buchstaben A,B.C und D bezeichnet sind. Die mit A bezeichneten Datenpakete sind einem Fernsehprogramm A. die mit B bezeichneten Datenpakete einem Fernsehprogramm B, die mit C bezeichneten Datenpakete einem Fernsehprogramm C und die mit D bezeichneten Datenpakete einem Fernsehprogramm D zugehörig. Im Demultiplexer 2 werden die dem Fernsehprogramm B zugehörigen Datenpakete aus dem MPEG-Transportstrom selektiert, was in der Figur 2b gezeigt ist.

Für die spätere MPEG-Decodierung dieser Datenpakete wird eine Information über die relative zeitliche Lage der in der Figur 2b gezeigten einzelnen Datenpakete benötigt. Um eine derartige Information zu erhalten. ist eine Systemuhr 4 vorgesehen. bei der es sich um einen hochgenauen Zähler handeln kann. Dieser erzeugt ein hochfrequentes Taktsignal, wie es in der Figur 2c dargestellt ist. Der beim Beginn jedes Datenpaketes B vorliegende Zählwert wird in der Vorrichtung 3 als Zeitinformation für das jeweilige Datenpaket ermittelt und diesem Datenpaket angehängt. Die Figur 2d zeigt die genannten Datenpakete. denen jeweils eine Zeitinformation 13 angehängt ist.

Die Datenpakete mit angehängter Zeitinformation 13 werden einem Datenratenkonverter 5 zugeführt und in der Datenrate herabgesetzt bzw zeitexpandiert. Durch diese Zeitexpansion wird eine Übertragung der Datenpakete mit angehängter Zeitinformation über einen Funkübertragungskanal ermöglicht dessen Bandbreite wesentlich kleiner ist als die für eine Satellitenübertragung des MPEG-Transportstromes zur Verfügung stehende Bandbreite. Die in der Datenrate herabgesetzten Datenpakete sind in der Figur 2e veranschaulicht.

Das Ausgangssignal des Datenratenkonverters 5 wird einem Funksender 6 zugeführt und in diesem in ein für eine Funkübertragung geeignetes Funksignal umgesetzt. Dieses Funksignal wird über eine Funkübertragungsstrecke 7 übertragen, die in der Figur 2 mit einer gestrichelten Linie angedeutet ist.

Auf der Funkübertragungsstrecke wird das Signal in unbekannter Weise zeitlich verzögert, so daß das in der Figur 2f gezeigte zeitverzögerte Funksignal auf der Empfangsseite ankommt. Dort gelangt es an einen Funkempfänger 8. in welchem das Funksignal in einer zum Funksender 6 inversen Weise verarbeitet wird. Das Ausgangssignal des Funkempfängers 8 wird einem Datenratenkonverter 9 zugeführt und dort wieder zeitkomprimiert, um die ursprüngliche Datenrate des Signals wiederherzustellen. Das Ausgangssignal des Datenratenkonverters ist in der Figur 2g gezeigt.

Das in der Datenrate wieder erhöhte Signal gelangt an eine Vorrichtung 10. die zur Abtrennung der Datenpakete aus dem übertragenen Signal vorgesehen ist und einen Zwischenspeicher für die abgetrennten Datenpakete aufweist.

Weiterhin ist empfangsseitig eine Systemuhr 11 vorgesehen, bei der es sich wiederum um einen hochgenauen Zähler handeln kann. Dieser wird durch die übertragenen Signale synchronisiert und stellt der Vorrichtung 10 hochfrequente Taktsignale zu Verfügung, die in der Figur 2h gezeigt sind. In der Vornchtung 10 werden unter Verwendung der von der Systemuhr 11 gelieferten Taktsignale und der ubertragenen Zeitinformationen Speichersteuersignale zur Steuerung des Auslesevorganges aus dem Speicher derart erzeugt, daß die einzelnen Datenpakete in denselben zeitlichen Abständen zueinander bereitgestellt werden, wie sie senderseitig vorlagen. Dies ist in der Figur 2i gezeigt.

Die in der Figur 2i gezeigten Datenpakete weisen zwar im Vergleich zu den in Figur 2b gezeigten Datenpaketen einen zeitlichen Versatz auf, der durch die verschiedenen. in Figur 1 gezeigten Signalverarbeitungsschritte bedingt ist. treten jedoch relativ zueinander exakt in denselben Zeitabständen auf wie die in Figur 2b gezeigten Datenpakete.

Die in der Figur 2i gezeigten Datenpakete werden dem MPEG-Decoder 12 zugeführt und dort einer MPEG-Decodierung unterworfen. Das Ausgangssignal des MPEG-Decoders 12 wird schließlich in bekannter Weise weiterverarbeitet, beispielsweise in ein auf dem Bildschirm eines Fernsehempfängers darstellbares oder in ein mittels eines Videorecorders aufzeichenbares Signal umgewandelt.

Die vorstehend beschriebene Erfindung ist beispielsweise verwendbar, um aus einem MPEG-Transportstrom sepanerte Datenpakete, die einem gewünschten Rundfunkprogramm zugehörig sind, von einem ersten Gerät der Unterhaltungselektronik drahtlos zu einem zweiten Gerät der Unterhaltungselektronik zu übertragen. Das erste Gerät der Unterhaltungselektronik kann ebenso wie das zweite Gerät der Unterhaltungselektronik ein Fernsehgerat, ein Videorecorder oder ein Hörrundfunkempfänger sein. Im genannten ersten Gerät sind der Demultiplexer 2, die Systemuhr 4, die Vorrichtung 3 zur Bestimmung der relativen zeitlichen Lage der einzelnen Datenpakete zueinander und zum Hinzufügen einer Zeitinformation zu jedem der Datenpakete, der Datenratenkonverter 5 und der Sender 6 vorgesehen. Das genannte zweite Gerat weist den Empfänger 8, den Datenratenkonverter 9, die Vomchtung 10 zum Abtrennen der Datenpakete und zur Zwischenspeicherung der abgetrennten Datenpakete, die Systemuhr 11, die mit den Zeitinformationen beaufschlagte Vorrichtung zur Steuerung des Auslesevorganges und den MPEG-Decoder 12 auf.

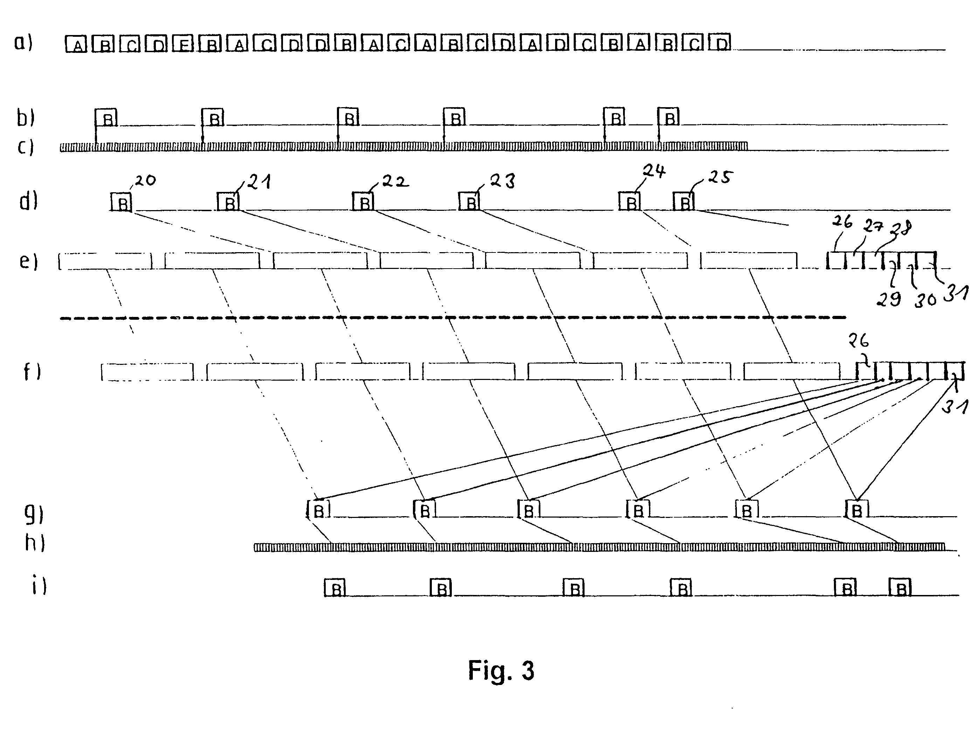

Figur 3 zeigt weiteres Ausführungsbeispiel zur Übertragung von Datenpaketen A, B, C, D eines MPEG-Transportstroms, wobei die Zeitinformation für die einzeinen Datenpakete als separater gemeinsamer Zeitinformationsblock 26, 27, 28, 29, 30, 31 für einzelne Datenblöcke 20, 21, 22, 23, 24, 25 übertragen wird.. Im übrigen entspricht die Vorgehensweise zur Erzeugung und Wiedergewinnnung der Zeitinformationen im wesentüchen der bereits im Zusammenhang mit den Figuren 1 und 2 beschriebenen Vorgehensweise. So im Demultiplexer 2 (vgl. Fig. 1) die dem Fernsehprogramm B zugehörigen Datenpakete aus dem MPEG-Transportstrom selektiert, was in der Figur 3b gezeigt ist. Für die spätere MPEG-Decodierung dieser Datenpakete wird eine Information über die relative zeitliche Lage der in der Figur 3b gezeigten einzelnen Datenpakete benötigt. Um eine derartige Information zu erhalten, ist widerum eine Systemuhr 4 (Fig. 1) vorgesehen, die ein hochfrequentes Taktsignal, wie es in der Figur 3c dargestellt ist, erzeugt. Der beim Beginn jedes Datenpaketes B vorliegende Zählwert wird in der Vornchtung 3 als Zeitinformation für das jeweilige Datenpaket ermittelt und als Zeitinformation 26 im Datenpaket 26, .., 31 angeordnet. Die Figur 3e zeigt die genannten Datenpakete 20, .. 25, denen jeweils ein Zeitinformationsdatenblock 26, .. 31 nachfolgt. Dieser Zeitinformationsdatenblock 26, .. 31 enthält die Zeitinformationen für die Datenpakete 20, .. 25. Wie bereits im Zusammenhang mit den Figuren 1 und 2 erläutert, sind die Datenpakete 20, .. 25 mit nachfolgenden Zeitinformationen 26, .. 31 in der Datenrate herabgesetzt bzw. zeitexpandiert. Durch diese Zeitexpansion wird eine Ubertragung der Datenpakete mit Zeitinformation über einen Funkübertragungskanal ermöglicht, dessen Bandbreite wesentlich kleiner ist als die für eine Satellitenübertragung des MPEG-Transportstromes zur Verfügung stehende Bandbreite. Die in der Datenrate herabgesetzten Datenpakete sind in der Figur 3e veranschaulicht. In Figur 2 ist mit einer gestrichelten Linie wiederum die Übertragung über einen Funkübertragungskanal angedeutet.

Auf der Funkübertragungsstrecke wird das Signal in unbekannter Weise zeitlich verzögert. so daß das in der Figur 3f gezeigte zeitverzögerte Funksignal auf der Empfangsseite ankommt. Auf der Empfangsseite einem Datenratenkonverter 9 zugeführt und dort wieder zeitkomprimiert, um die ursprüngliche Datenrate des Signals wiederherzustellen. Das Ausgangssignal des Datenratenkonverters ist in der Figur 3g gezeigt. Weiterhin ist empfangsseitig wiederum eine Systemuhr 11 vorgesehen. Diese wird durch die übertragenen Signale synchronisiert und stellt der Vorrichtung 10 hochfrequente Taktsignale zu Verfügung, die in der Figur 3h gezeigt sind. In der Vorrichtung 10 werden unter Verwendung der von der Systemuhr 11 gelieferten Taktsignale und der ubertragenen Zeitinformationen 26, .. ,31 Speichersteuersignale zur Steuerung des Auslesevorganges aus dem Speicher derart erzeugt, daß die einzelnen Datenpakete in denselben zeitlichen Abständen zueinander bereitgestellt werden, wie sie senderseitig vorlagen. Dies ist in der Figur 3i gezeigt. Die in der Figur 3i gezeigten Datenpakete weisen zwar im Vergleich zu den in Figur 3b gezeigten Datenpaketen einen zeitlichen Versatz auf, der durch die verschiedenen, in Figur 1 gezeigten Signalverarbeitungsschritte bedingt ist, treten jedoch relativ zueinander exakt in denselben Zeitabständen auf wie die in Figur 3b gezeigten Datenpakete.

Die vorstehend beschriebene Erfindung ist beispielsweise verwendbar, um aus einem MPEG-Transportstrom separierte Datenpakete, die einem gewunschten Rundfunkprogramm zugehorig sind. von einem ersten Gerat der Unterhaltungselektronik drantlos zu einem zweiten Gerat der Unterhaltungselektronik zu ubertragen. Das erste Gerat der Unterhaltungselektronik kann ebenso wie das zweite Gerat der Unterhaltungselektronik ein Fernsehgerat ein Videorecorder oder ein Horrundfunkempfänger sein Im genannten ersten Gerät sind der Demultiplexer 2, die Systemuhr 4, die Vorrichtung 3 zur Bestimmung der relativen zeitlichen Lage der einzelnen Datenpakete zueinander und zum Hinzufügen einer Zeitinformation zu jedem der Datenpakete, der Datenratenkonverter 5 und der Sender 6 vorgesehen. Das genannte zweite Gerät weist den Empfänger 8, den Datenratenkonverter 9, die Vorrichtung 10 zum Abtrennen der Datenpakete und zur Zwischenspeicherung der abgetrennten Datenpakete, die Systemuhr 11, die mit den Zeitinformationen beaufschlagte Vorrichtung zur Steuerung des Auslesevorganges und den MPEG-Decoder 12 auf.

Mittels der Erfindung wird nach alledem für die genannte Übertragung eine gemeinsame Zeitbasis geschaffen, aufgrund derer im Empfänger die senderseitig vorhandenen relativen zeitlichen Verhältnisse der einzelnen Datenpakete zueinander wiederhergestellt werden können. Dies ist eine wesentliche Voraussetzung dafür, daß empfangsseitig ein herkömmlicher MPEG-Decoder einsetzbar ist, welcher aufgrund seiner begrenzten Speichermoglichkeiten kritische Zeitanforderungen an die ihm zugeführten Datenpakete stellt.

## Patentansprüche

1. Verfahren zur Übertragung von zeitkritischen Datenpaketen mit folgenden Verfahrensschritten:
- Senderseitiges Bereitstellen der zeitlich voneinander beabstandeten Datenpakete,
- Bestimmung der relativen zeitlichen Lage der einzelnen Datenpakete zueinander unter Verwendung einer Systemuhr,
- Ermittlung einer Zeitinformation für jedes Datenpaket,
- Zusammenfassen einer Mehrzahl von Zeitinformationen vorheriger Datenpakete zu einem separaten Datenpaket,
- Übertragen der Datenpakete über eine drahtlose Übertragungsstrecke,
- Übertragen des separaten Datenpaketes mit den Zeitinformationen über die drahtlose Übertragungsstrecke,
- Empfangsseitiges Abtrennen und Zwischenspeichern der Datenpakete und des separaten Datenpaketes,
- Synchronisieren einer weiteren empfangsseitig angeordneten Systemuhr mittels der übertragenen Zeitinformationen,
- Bereitstellen der einzelnen Datenpakete in den selben zeitlichen Abständen zueinander, wie sie senderseitig vorlagen, durch ein gesteuertes Auslesen des Zwischenspeichers unter Verwendung der separat übertragenen Zeitinformationen.

2. Verfahren nach Anspruch 1,
**dadurch gekennzeichnet, dass**
die Datenpakete senderseitig einer Datenratenkonversion und empfangsseitig einer Datenkonversion unterworfen werden.

3. Verfahren nach Anspruch 1 oder 2,
**dadurch gekennzeichnet,dass**
das senderseitige Bereitstellen der zeitlich voneinander beabstandeten Datenpakete durch ein Abtrennen der Datenpakete aus einem MPEG-Transportstrom erfolgt.

4. Verfahren nach einem der Ansprüche 1 bis 3,
**dadurch gekennzeichnet, dass**
die Datenpakete einem von mehreren im MPEG-Transportstrom übertragenen Rundfunkprogrammen zugehörig sind.

5. Verfahren nach einem der Ansprüche 1 bis 4,
**dadurch gekennzeichnet, dass**
die Datenpakete einem Fernsehprogramm oder einem Hörrundfunkprogramm zugehörig sind.

6. Verfahren nach einem der vorhergehenden Ansprüche,
**dadurch gekennzeichnet, dass**
die Übertragung der zeitkritischen Datenpakete von einem ersten Gerät der Unterhaltungselektronik zu einem zweiten Gerät der Unterhaltungselektronik erfolgt.

7. Verfahren nach einem der Ansprüche 3 bis 6
**dadurch gekennzeichnet, dass**
der MPEG-Transportstrom von einem Satellitenempfänger oder einer Set-Top-Box zur Verfügung gestellt wird.

8. Gerät der Unterhaltungselektronik mit
- einem Demultiplexer (2) zur Abtrennung von einem Rundfunkprogramm zugehörigen Datenpaketen aus einem MPEG-Transportstrom,
- Mittel zur Bereitstellung der abgetrennten Datenpakete in zeitlich voneinander beabstandeten Datenpaketen,
- einer Systemuhr (4),
- einer mit der Systemuhr (4) verbundene Vorrichtung (3) zur Bestimmung der relativen zeitlichen Lage der einzelnen Datenpakete zueinander,
- einer Vorrichtung (3) zum Hinzufügen einer Zeitinformation zu den Datenpaketen und zur Anordnung der einem jeweiligen Datenpaket zugehörigen Zeitinformation im jeweiligen Datenpaket,
- Mittel zur Zusammenfassung einer Mehrzahl von Zeitinformationen vorheriger Datenpakete zu einem separaten Zeitinformationsblock,
- einem Sender (6) zur Ausstrahlung der mit den Zeitinformationen versehenen Datenpakete, und des separaten Zeitinformationsblocks.

9. Gerät nach Anspruch 8,
**dadurch gekennzeichnet, dass**
es weiterhin einen Datenratenkonverter (5) aufweist.

10. Gerät der Unterhaltungselektronik mit
- einem Empfänger (8) zum Empfang von mit Zeitinformationen versehenen Datenpaketen und zum Empfang eines separaten Zeitinformationsblocks bestehend aus zusammengefassten Zeitinformationen vorhergehender Datenpakete,
- Mittel zur Abtrennung der von mit Zeitinformationen versehenen Datenpakete und des Zeitinformationsblocks,
- einem Speicher (10) zum Zwischenspeichern der abgetrennten Datenpakete, und des Zeitinformationsblocks,
- einer Systemuhr (11),
- Mittel zur Synchronisierung der Systemuhr (11) anhand der empfangenen Zeitinformationen der Datenpakete,
- und einer Vorrichtung (10) zur Steuerung des Auslesevorganges der zwischengespeicherten Datenpakete aus dem Speicher (10) durch die im Speich (10) zwischengespeicherten Zeitinformationen des Zeitinformationsblocks derart, dass die einzelnen Datenpakete in denselben zeitlichen Abständen zueinander bereitgestellt werden, wie sie senderseitig vorlagen.

11. Gerät nach Anspruch 10,
**dadurch gekennzeichnet, dass**
der Empfänger (8) ein Funkempfänger ist und /oder das Gerät einen Datenkonverter (9) aufweist und/oder das Gerät einen MPEG-Decoder (12) aufweist, dem die einzelnen Datenpakete zugeführt werden.

## Claims

1. Method of transmitting time-critical data packets comprising the following method steps:
- provision at the transmitter end of the data packets spaced apart from one another in time,
- determination of the relative position in time of the individual data packets with respect to one another using a system clock,
- determination of a time information item for every data packet,
- combination of a multiplicity of time information items of previous data packets to form a separate data packet,
- transmission of the data packets over a wireless transmission link,
- transmission of the separate data packets with the time information items over the wireless transmission link,
- separation at the receiving end and temporary storage of the data packets and of the separate data packets,
- synchronization of a further system clock disposed at the receiving end by means of the transmitted time information items,
- provision of the individual data packets in the same time intervals with respect to one another in which they were present at the transmitter end by a controlled read-out of the temporary memory using the separately transmitted time information items.

2. Method according to Claim 1, **characterized in that** the data packets are subjected at the transmitter end to a data rate conversion and at the receiving end to a data conversion.

3. Method according to Claim 1 or 2, **characterized in that** the transmitter-end provision of the data packets spaced apart in time from one another takes place by separation of the data packets from an MPEG transport stream.

4. Method according to any of Claims 1 to 3, **characterized in that** the data packets are associated with one of a plurality of broadcast programmes transmitted in the MPEG transport stream.

5. Method according to any of Claims 1 to 4, **characterized in that** the data packets are associated with a television programme or a sound broadcast programme.

6. Method according to one of the preceding claims, **characterized in that** the transmission of the time-critical data packets takes place from a first entertainment electronics appliance to a second entertainment electronics appliance.

7. Method according to any of Claims 3 to 6, **characterized in that** the MPEG transport stream is made available by a satellite receiver or a set-top box.

8. Entertainment electronics appliance comprising
- a demultiplexer (2) for separating data packets associated with a broadcast programme from an MPEG transport stream,
- means for providing the separated data packets in data packets spaced apart from one another in time,
- a system clock (4),
- a device (3), connected to the system clock (4), for determining the relative position in time of the individual data packets with respect to one another,
- a device (3) for adding a time information item to the data packets and for arranging the time information associated with the respective data packet in the respective data packet,
- means for combining a multiplicity of time information items of previous data packets to form a separate time information block,
- a transmitter (6) for irradiating the data packets provided with the time information items and the separate time information blocks.

9. Appliance according to Claim 8, **characterized in that** it furthermore has a data rate converter (5).

10. Entertainment electronics appliance comprising
- a receiver (8) for receiving data packets provided with time information items and for receiving a separate time information block comprising combined time information items of preceding data packets,
- means for separating the data packets provided with time information items and the time information blocks,
- a memory (10) for the temporary storage of the separated data packets and of the time information blocks,
- a system clock (11),
- means for synchronizing the system clock (11) on the basis of the received time information items of the data packets,
- and a device (10) for controlling the read-out operation of the temporally stored data packets from the memory (10) by means of the time information items of the time information blocks temporarily stored in the memory (10) in such a way that the individual data packets are provided in the same time intervals with respect to one another in which they were present at the transmitter end.

11. Appliance according to Claim 10, **characterized in that** the receiver (8) is a radio receiver and/or the appliance has a data converter (9) and/or the appliance has an MPEG decoder (12) to which the individual data packets are fed.

## Revendications

1. Procédé pour transmettre des paquets de données critiques du point de vue temps, comportant les étapes suivantes de procédé consistant à :
- préparer, côté émetteur, les paquets de données distants les uns des autres dans le temps,
- déterminer la position temporelle relative des différents paquets de données les uns par rapport aux autres, moyennant l'utilisation d'une horloge du système,
- déterminer une information de temps pour chaque paquet de données,
- rassembler une multiplicité d'informations de temps de paquets de données précédents pour un paquet de données séparé,
- transmettre les paquets de données au moyen d'une section de transmission sans fil,
- transmettre le paquet de données séparé avec les informations de temps au moyen d'une section de transmission sans fil,
- séparer et mémoriser temporairement, côté réception, les paquets de données et le paquet de données séparé,
- synchroniser une autre horloge du système, disposée côté réception, à l'aide des informations de temps transmises,
- délivrer les différents paquets de données séparés les uns des autres par les mêmes intervalles de temps que ceux présents côté émission, au moyen d'une lecture commandée de la mémoire intermédiaire moyennant l'utilisation des informations de temps transmises séparément.

2. Procédé selon la revendication 1, **caractérisé en ce que** les paquets de données sont soumis côté émission à une conversion de cadence des données et côté réception à une conversion de données.

3. Procédé selon la revendication 1 ou 2, **caractérisé en ce que** la délivrance, côté émission, des paquets de données distants les uns des autres dans le temps, s'effectue au moyen d'une séparation de paquets de données à partir d'un flux de transport MPEG.

4. Procédé selon l'une des revendications 1 à 3, **caractérisé en ce que** les paquets de données sont associés à l'un de plusieurs programmes de radiodiffusion transmis dans le flux de transport MPEG.

5. Procédé selon l'une des revendications 1 à 4, **caractérisé en ce que** les paquets de données sont associés à un programme de télévision ou à un programme de radiodiffusion.

6. Procédé selon l'une des revendications précédentes, **caractérisé en ce que** la transmission des paquets de données critiques du point de vue temps est effectuée par un premier appareil de l'électronique du spectacle en direction d'un second appareil de l'électronique du spectacle.

7. Procédé selon l'une des revendications 3 à 6, **caractérisé en ce que** le flux de transport MPEG est délivré par un récepteur de satellite ou par une unité Set-Top-Box.

8. Appareil de l'électronique du spectacle comportant
- un démultiplexeur (2) pour séparer des paquets de données associés à un programme de radiodiffusion, à partir d'un flux de transport MPEG,
- des moyens pour délivrer les paquets de données séparés sous la forme de paquets de données distants les uns des autres dans le temps,
- une horloge (4) du système,
- un dispositif (3) relié à l'horloge (4) du système pour déterminer la position temporelle relative des différents paquets de données les uns par rapport aux autres,
- un dispositif (3) pour ajouter une information temporelle au paquet de données et pour disposer l'information de temps, associée à un paquet de données respectif, dans ce paquet de données respectif,
- des moyens pour rassembler une multiplicité d'informations de temps de paquets de données précédents pour former un bloc séparé d'informations de temps,
- un émetteur (6) servant à émettre les paquets de données pourvus des informations de temps, et du bloc séparé d'informations de temps.

9. Appareil selon la revendication 8, **caractérisé en ce qu'**il comporte en outre un convertisseur (5) de 1a cadence des données.

10. Appareil d'électronique du spectacle comportant
- un récepteur (8) pour recevoir des paquets de données pourvus d'informations de temps et pour recevoir un bloc séparé d'informations de temps constitué par des informations de temps rassemblées de paquets de données précédents,
- des moyens pour séparer les paquets de données pourvus d'informations de temps, et le bloc d'informations de temps,
- une mémoire (10) pour mémoriser temporairement les paquets de données séparés et le bloc d'informations de temps,
- une horloge (11) du système,
- des moyens pour synchroniser l'horloge (11) du système sur la base des informations de temps reçues des paquets de données, et
- un dispositif (10) pour commander le processus de lecture des paquets de données mémorisés temporairement à partir de la mémoire (10), au moyen des informations de temps, mémorisées temporairement dans la mémoire (10), du bloc d'informations de temps de telle sorte que les paquets individuels de données sont délivrés en étant séparés les uns des autres par les mêmes intervalles de temps que ceux présents côté émission.

11. Appareil selon la revendication 10, **caractérisé en ce que** le récepteur (8) est un récepteur radio et/ou que l'appareil comporte un convertisseur de données (9) et/ou que l'appareil comporte un décodeur MPEG (12), auquel sont envoyés les différents paquets de données.
